# DEMANDE DE BREVET EUROPEEN

(11) **EP 0 719 691 A1**
(43) Date de publication de la demande: **03.07.1996**
(21) Numéro de dépôt: 95402763.7
(22) Date de dépôt: 07.12.1995
(51) Int. Cl.: B62B 3/00

(54) **Chariot de manutention encastrable**

(30) Priorité: 29.12.1994 FR 9415850
(71) Demandeur: ATELIERS REUNIS CADDIE, F-67301 Schiltigheim Cedex (FR)
(72) Inventeur: Joseph, Alice, Ateliers Reunis Caddie S.A., F-67301 Schiltigheim Cédex (FR); Le Marchand, Alain, F-67116 Reichstett (FR)
(74) Mandataire: CABINET BONNET-THIRION

(57) **Abrégé**

Le chariot comprend un socle trapézoïdal (1) avec deux branches (3) s'écartant vers l'arrière du chariot, deux ridelles (14A,14B) adaptées à pivoter aux extrémités des branches (3) du socle (1), et une grille de fond (32) articulée à la base d'une première ridelle (14A). Il est caractérisé par un moyen de bielle (35) coopérant d'une part avec la grille (32) et, d'autre part, avec la seconde ridelle (14B) de manière que le soulèvement de la grille (32) commande le pivotement des ridelles (14A,14B) en direction du socle (1).

## Description

La présente invention concerne un chariot de manutention encastrable.

Le chariot est du type appelé couramment "roll" servant au transport de cartons, paquets ou cageots de marchandises empilés. Il comporte généralement un socle monté sur des roulettes, deux parois latérales ou ridelles et des sangles élastiques permettant de rapprocher les ridelles l'une vers l'autre pour améliorer la tenue des charges.

On a proposé plusieurs solutions pour ranger les chariots à vide.

La solution la plus ancienne consiste à prévoir des ridelles démontables. On stocke alors d'un côté les ridelles et, de l'autre, les socles qui peuvent par exemple être empilés les uns sur les autres dans un chariot non démonté.

Une autre solution consiste à prévoir un socle présentant une forme autorisant l'encastrement d'un autre socle avec une grille pouvant être relevée, articulée à la base de l'une des ridelles. On a ainsi proposé des socles en "Z" mais ceux-ci présentent l'inconvénient de former une file de chariots oblique entraînant une perte de place par rapport à une file droite. Pour pallier cet inconvénient, on a proposé des socles en "V" ou de forme trapézoïdale ouverts à l'arrière. Le document GB 2 242 893 décrit un chariot de ce type. Il comporte un socle en "V", deux ridelles latérales articulées à l'extrémité des branches du "V" de manière à pouvoir être soit parallèles l'une à l'autre en configuration dite de fonctionnement, soit resserrées le long du socle à l'avant du "V" en configuration dite de rangement. Le chariot est monté sur deux roulettes avant ménagées sous chaque ridelle et deux roulettes arrière prévues à l'extrémité des branches du socle. Pour mettre le chariot en configuration de rangement, on soulève la grille de fond puis on fait pivoter les ridelles pour les rapprocher l'une vers l'autre à l'avant du chariot.

La présente invention a pour but de proposer un chariot de ce type qui soit plus simple à manipuler entre la configuration de fonctionnement et la configuration de rangement.

Elle propose un chariot de manutention encastrable muni de roulettes, comprenant un socle trapézoïdal avec deux branches s'écartant vers l'arrière du chariot, deux ridelles adaptées à pivoter aux extrémités des branches du socle, et une grille de fond articulée à la base d'une première ridelle, caractérisé par un moyen de bielle coopérant d'une part avec la grille et, d'autre part, avec la seconde ridelle de manière que le soulèvement de la grille commande le pivotement des ridelles en direction du socle.

Le changement de configuration s'opère ainsi simplement en soulevant ou en abaissant la grille.

Selon une forme de réalisation avantageuse, le moyen de bielle est une tringle ayant une extrémité coopérant avec un axe d'articulation ménagé à la base de ladite seconde ridelle et une extrémité articulée sur la grille à une distance de son axe d'articulation ménagé à la base de ladite première ridelle, telle que, lorsque l'on soulève la grille, la tringle va tirer la seconde ridelle pour la rabattre vers le socle tandis que la grille fait levier pour rabattre la première ridelle.

La présente invention sera mieux comprise et d'autres avantages apparaîtront à la lumière de la description qui va suivre d'un exemple de réalisation, description faite en référence aux dessins sur lesquels :
- la figure 1 est une vue schématique en perspective du chariot, selon un exemple de réalisation de l'invention, en configuration de fonctionnement ;
- la figure 2 est une vue similaire à la figure 1 montrant le chariot en configuration de rangement, et montrant en traits interrompus le socle d'un deuxième chariot encastré ;
- la figure 3 est une vue en coupe selon la ligne III-III de la figure 1 ; et
- les figures 4 à 9 illustrent le fonctionnement du chariot :

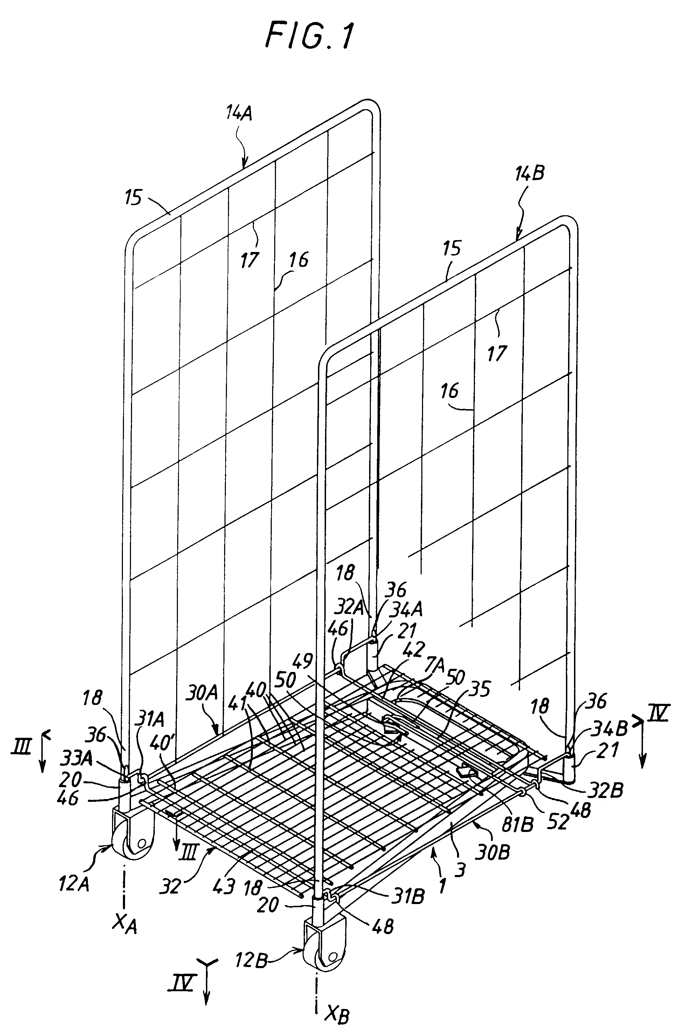

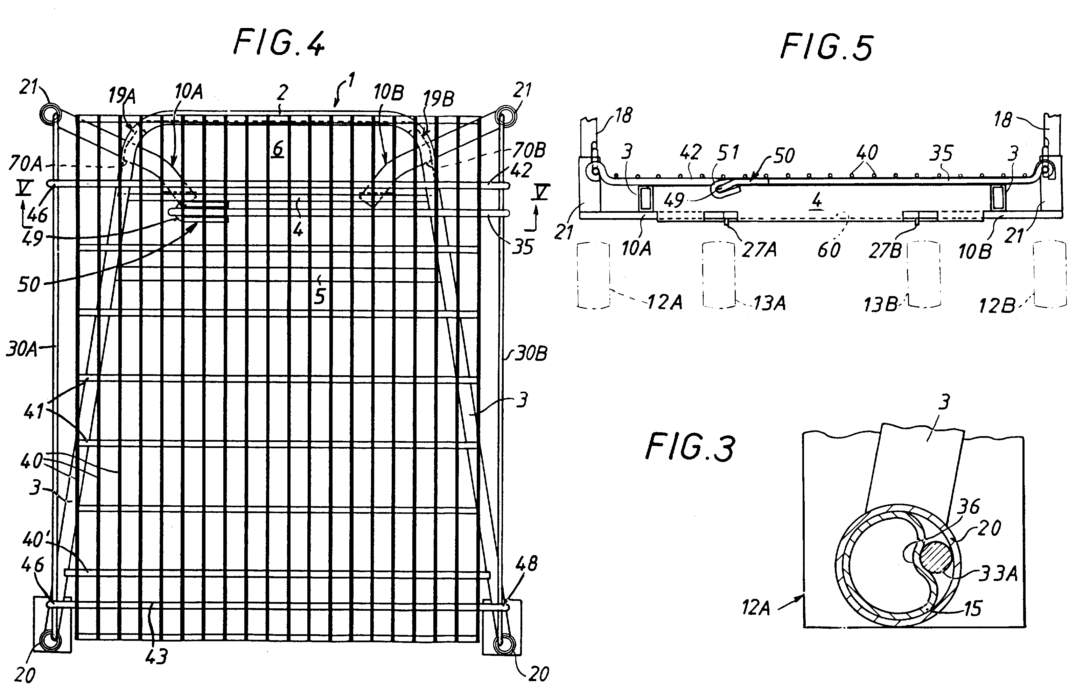

- la figure 4 est une vue en coupe selon la ligne IV-IV de la figure 1 ;
- la figure 5 est une vue en coupe selon la ligne V-V de la figure 4 ;

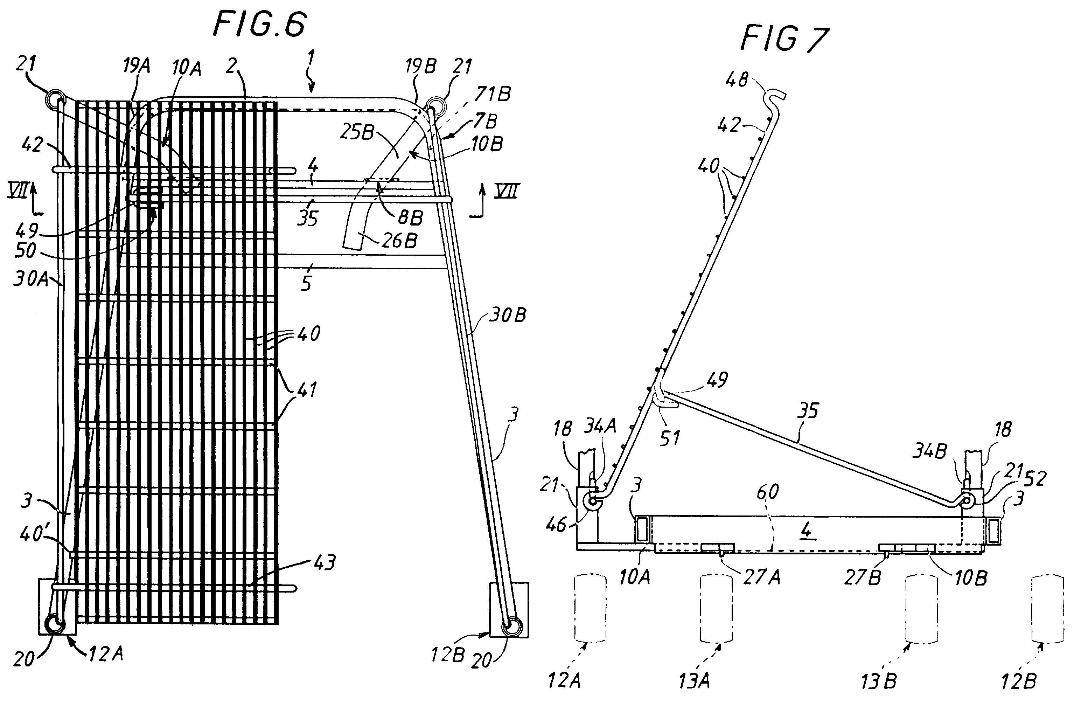

- les figures 6 et 7 sont des figures similaires aux figures 4 et 5 montrant la grille dans une position intermédiaire ; et

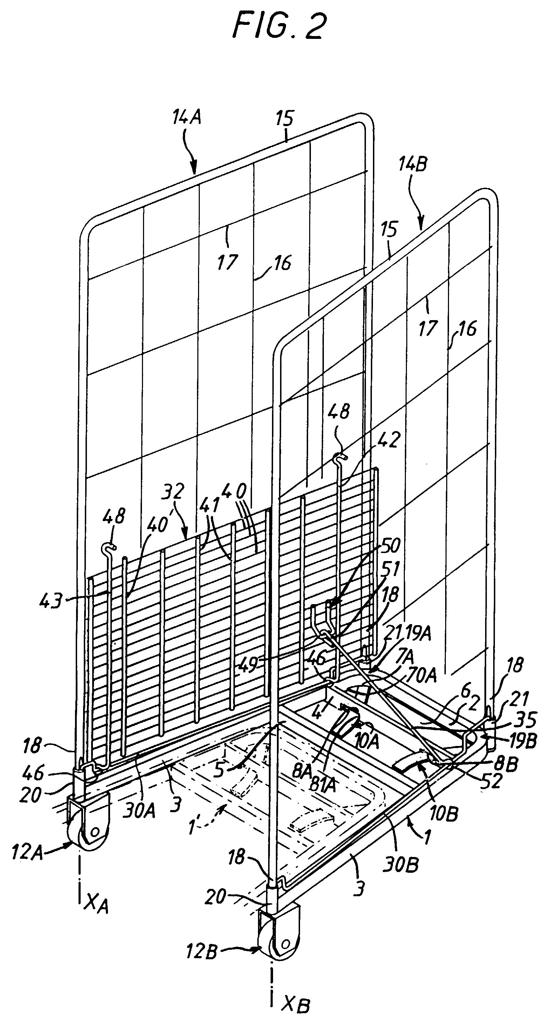

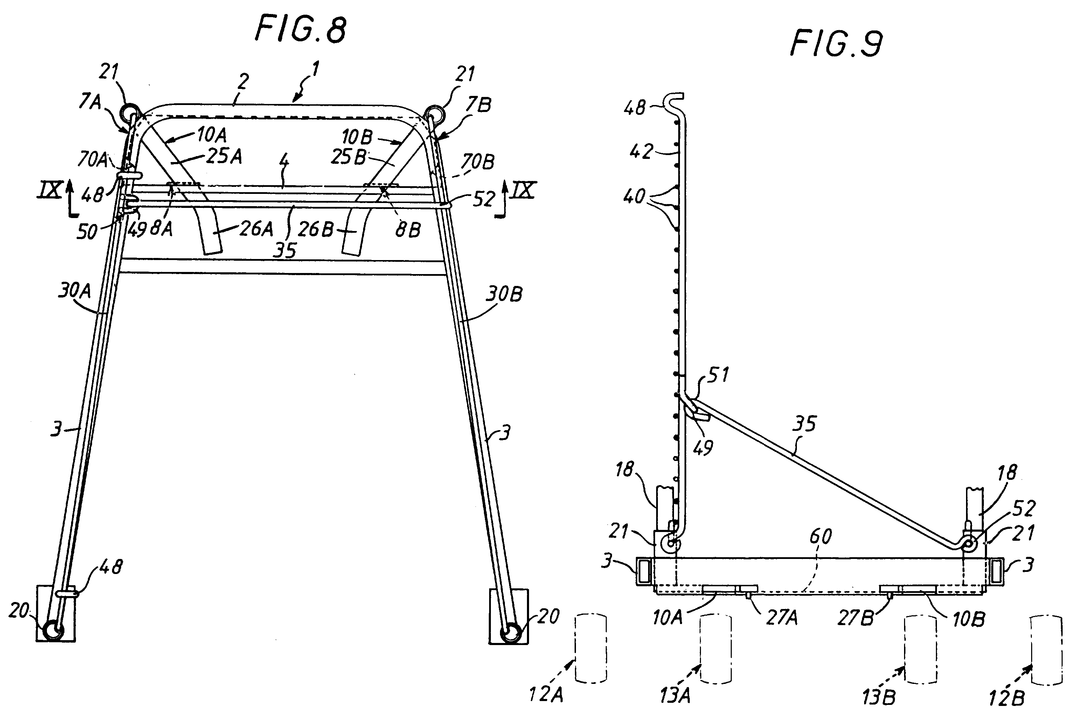

- les figures 8 et 9 sont également des figures similaires aux figures 4 et 5 montrant la grille en position soulevée comme sur la figure 2.

Selon l'exemple de réalisation choisi et représenté sur les figures, le chariot comprend un socle 1 de forme trapézoïdale avec deux branches latérales 3 et une portion avant 2 qui forment un "U" de section rectangulaire (voir figure 2), les deux branches latérales 3 étant écartées pour permettre l'encastrement d'un autre socle 1', comme représenté en traits interrompus sur la figure 2.

Pour les besoins de la description, l'arrière du chariot est défini par les extrémités des branches 3 du socle 1.

Comme on le voit mieux sur la figure 2, deux traverses intermédiaire 4 et arrière 5 de sections rectangulaires sont ménagées pour rigidifier l'avant du socle 1. Une plaque de fond 6 s'étend de la traverse intermédiaire 4 à la portion avant 2 du socle. Une découpe 7A, sous l'angle gauche 19A du socle et 7B sous l'angle droit 19B du socle 1 ainsi que des découpes rectangulaires 8A, 8B sous la traverse intermédiaire 4 sont prévues pour permettre le passage et le coulissement de bras de liaisons coudés plats 10A, 10B au dessus de la plaque de fond 6.

Deux roulettes arrière 12A et 12B se trouvent à l'extrémité des branches 3 du socle et deux roulettes avant 13A, 13B sous la plaque de fond 6. Les roulettes sont schématisées en traits interrompus sur les figures 5, 7 et 9.

Le chariot comporte deux parois latérales ou ridelles 14A, 14B, constituée chacune d'un cadre 15 en "U" inversé de section circulaire avec un quadrillage de fils soudés longitudinaux 16 et transversaux 17. Pour alléger les figures 1 et 2, ces fils ne sont pas complètement représentés. Les ridelles sont assemblées par les parties terminales 18 des cadres 15 qui sont introduites à l'arrière du chariot dans des douilles arrière 20 qui se dressent aux extrémités des branches 3 du socle 1, et, à l'avant du chariot, dans des douilles avant 21 qui se dressent aux extrémités des bras de liaison coudés 10A, 10B.

Comme on le voit mieux sur la figure 8 notamment, les bras de liaison 10A, 10B comprennent une portion droite 25A, 25B, et une extrémité coudée 26A, 26B sous laquelle sont disposées des saillies 27A, 27B visibles sur les figures 6, 7 et 9 adaptées à coopérer avec le bord arrière 60 de la plaque de fond 6.

A la base de chaque ridelle 14A, 14B, est agencée une tige, respectivement 30A, 30B, de section circulaire, formant chacune un axe d'articulation, la tige 30A pour une grille de fond 32 et la tige 30B pour une tringle 35 qui seront décrites ci-après. Les parties terminales avant et arrière des tiges 30A, 30B sont repliées à angles droits en "U" inversé, de manière à former un rebord avant 31A, 31B et un rebord arrière 32A, 32B et, d'autre part une extrémité libre avant 33A, 33B introduite dans la douille arrière 20 et, d'autre part, une extrémité libre arrière 34A, 34B, introduite dans la douille avant 21. Comme on le voit mieux sur la figure 3, une empreinte 36 avec un fond arrondi est ménagée par déformation dans la partie terminale 18 du cadre 15 de la ridelle 14A pour permettre l'introduction des extrémités libres 32A, 34A dans les douilles arrière 20 tout en autorisant le pivotement des ridelles 14A, 14B par rapport auxdits tronçons de tube 20 autour d'axes verticaux référencés XA et XB sur les figures 1 et 2. La même construction est utilisée à l'avant du socle pour assembler les extrémités 34A, 34B des tiges 30A, 30B dans les douilles avant 21.

La grille de fond 32 est rectangulaire constituée de fils métalliques soudés longitudinaux 40 et transversaux 41. Ses dimensions sont telles qu'elle repose sur le socle 1 et le recouvre lorsque les ridelles 14A, 14B s'étendent parallèlement (situation de la figure 1). L'un des fils métalliques transversaux, référencé 40', comporte des parties terminales dépassantes adaptées à reposer sur les branches 3 du socle. Pour alléger la figure 1 tous les fils de la grille 32 n'ont pas été représentés. Deux tiges avant 42 et arrière 43 soudées sous la grille 32 servent à l'articulation de celle-ci sur la tige 30A ménagée à la base de la ridelle 14A. A cet effet, les tiges avant 42 et arrière 43 présentent une partie terminale dépassante avec un oeillet 46 traversé par la tige 30A. Les oeillets 46 sont placés près des rebords 31A, 32A de sorte que le débattement longitudinalement de la grille 32 est empêché. Du côté de la ridelle 14B, les tiges avant 42 et arrière 43 présentent une partie terminale dépassante avec un crochet 48 adapté à coopérer avec la tige 30B ménagée à la base de la ridelle 14B également contre les rebords 31B, 32B lorsque la grille repose sur le socle.

La tringle 35, qui selon l'invention permet de commander le pivotement automatique des ridelles 14A, 14B autour des axes de pivotement XA, XB, est reliée de manière articulée d'une part à la tige 30B ménagée à la base de la ridelle 14B et, d'autre part, à la grille 32 par l'intermédiaire d'une boucle d'articulation 50 en "U", pliée pour dégager l'axe d'articulation 49 de la grille 32 (voir figure 2). La tringle 35 comporte d'une part un oeillet 51 coopérant avec l'axe d'articulation 49, et, d'autre part, un oeillet 52 coopérant avec la tige 30B ménagée à la base de la ridelle 14B.

Sur les figures 4 et 5, on voit le chariot en configuration de fonctionnement, la grille 32 rabattue sur le socle 1 et les ridelles 14A, 14B parallèles l'une à l'autre. La tringle 35 se trouve disposée sous la grille 32, parallèlement aux fils transversaux 41 de celle-ci, entre la traverse arrière 5 et la portion avant 2 du socle.

Dans cette situation, les crochets 48, coopérant avec la tige 30B ménagée à la base de la ridelle 14B, verrouillent les ridelles 14A, 14B en position parallèles l'une à l'autre. S'il arrive, lorsque l'on fait fonctionner le chariot, que les crochets 48 se soulèvent et ne coopèrent plus avec la tige 30B, les ridelles ne pourront en tout état de cause pivoter au-delà de leur position parallèles l'une à l'autre, grâce à la butée des saillies 27A, 27B, ménagées sous les extrémités libres des bras de liaison 10A, 10B (voir figure 5), contre le bord arrière 60 de la plaque de fond 6, et grâce également à la butée des bras 10A, 10B contre le bord arrière 70A, 70B des découpes 7A, 7B (voir figure 4).

Pour faciliter la description du fonctionnement du chariot, le passage en position de rangement a été décomposé ci-après en deux temps correspondant à un rabattement des ridelles l'une après l'autre.

Pour mettre le chariot en configuration de rangement, on fait pivoter la grille 32 en direction de la ridelle 14A, ce qui entraîne également le soulèvement de la tringle 35 au dessus du socle.

La tringle 35 tire la ridelle 14B par son extrémité reliée à la tige 30B et la fait pivoter jusque dans la situation représentée sur les figures 6 et 7. Le bras de liaison 10B solidarisé à la ridelle 14B a coulissé dans la découpe 7B située dans l'angle droit 19B du socle et dans la découpe 8B de la traverse intermédiaire 4, l'extrémité coudée 26B du bras 10B se retrouvant entre la traverse intermédiaire 4 et la traverse arrière 5. Le pivotement de la ridelle 14B est alors bloqué par la butée de la douille avant 21 contre le socle 1 à l'angle droit 19B.

Le soulèvement plus loin de la grille 32 va alors commander le pivotement de la seconde ridelle 14A par un effet de levier. Lorsque la grille 32 est en fin de course dans la position verticale recherchée, on se trouve dans la situation des figures 8 et 9 avec la ridelle 14A et son bras de liaison dans la même position que celle déjà adoptée par la ridelle 14B et son bras de liaison 10B, la douille avant 21 butant sur le socle 1 à l'angle 19A.

Le simple soulèvement de la grille commande ainsi le rabattement des ridelles en direction du socle du chariot. A l'inverse, le simple rabaissement de la grille commande l'écartement des ridelles en position parallèles.

Il va de soi que des variantes de réalisation sont possibles, notamment on peut utiliser d'autres moyens pour permettre le coulissement de bras de liaison et leur blocage contre le socle, et d'autre forme pour ces bras de liaison.

## Revendications

1. Chariot de manutention encastrable muni de roulettes, comprenant un socle trapézoïdal (1) avec deux branches (3) s'écartant vers l'arrière du chariot, deux ridelles (14A,14B) adaptées à pivoter aux extrémités des branches (3) du socle (1), et une grille de fond (32) articulée à la base d'une première ridelle (14A), caractérisé par un moyen de bielle (35) coopérant d'une part avec la grille (32) et, d'autre part, avec la seconde ridelle (14B) de manière que le soulèvement de la grille (32) commande le pivotement des ridelles (14A,14B) en direction du socle (1).

2. Chariot selon la revendication 1, caractérisé en ce que ledit moyen de bielle est une tringle (35) ayant une extrémité (51) coopérant avec un axe d'articulation (30B) ménagé à la base de ladite seconde ridelle (10B) et une extrémité (52) articulée sur la grille (32) à distance de son axe d'articulation (30A) ménagé à la base de ladite première ridelle (10A).

3. Chariot selon la revendication 2, caractérisé en ce qu'une tige de section circulaire (30A,30B) est ménagée à la base de chaque ridelle (14A,14B), l'une (30A) formant l'axe d'articulation de la grille (32) et l'autre (30B) formant l'axe d'articulation de ladite tringle (35).

4. Chariot selon la revendication 3, caractérisé en ce que ladite tringle (35) a ses extrémités repliées de manière à former un oeillet (52) traversé par la tige de section circulaire (30B) ménagée à la base de ladite seconde ridelle (14B) et un oeillet (51) traversé par une boucle d'articulation (50) ménagée sous la grille (32).

5. Chariot selon l'une quelconque des revendications précédentes, caractérisé en ce que deux roulettes avant (13A, 13B) étant ménagées sous une plaque de fond (6), l'extrémité avant de chaque ridelle est reliée par un bras de liaison coulissant (10A, 10B) au socle (1).

6. Chariot selon la revendication 5, caractérisé par deux découpes d'angle (7A, 7B) ménagées sous l'angle droit (19A) et sous l'angle gauche (19B) du socle (1) et deux découpes (8A, 8B) ménagées sous une traverse intermédiaire (4) pour le passage et le coulissement des bras de liaison (10A, 10B) au dessus de la plaque de fond (6) qui s'étend entre la traverse intermédiaire (4) et la partie avant (2) du socle.

7. Chariot selon la revendication 6, caractérisé en ce que les ridelles (14A,14B) en position rabattue sont adaptées à buter contre l'avant du socle (1).

8. Chariot selon l'une quelconque des revendications précédentes, caractérisé par des moyens de verrouillage desdites ridelles en position parallèle l'une à l'autre.

9. Chariot selon la revendication 8, caractérisé en ce que lesdits moyens de verrouillage comprennent des crochets de verrouillage (48) ménagés sur la grille (32) adaptés à coopérer avec la tige de section circulaire (30B) ménagée à la base de la ridelle (14B).

10. Chariot selon l'une quelconque des revendications 6 à 9, caractérisé par des moyens de butée comprenant une saillie (27A, 27B) ménagée sous chaque bras de liaison (10A, 10B) à son extrémité adaptée à buter contre le bord arrière (60) de ladite plaque de fond (6) et le bord arrière (71A, 71B) des découpes d'angle (7A, 7B) contre lequel lesdits bras de liaison (10A,10B) sont adaptés à buter.
